# EUROPÄISCHE PATENTSCHRIFT

(11) **EP 3 449 613 B1**
(45) Veröffentlichungstag und Bekanntmachung des Hinweises auf die Patenterteilung: **04.09.2019**
(21) Anmeldenummer: 17735442.0
(22) Anmeldetag: 27.06.2017
(51) Int. Cl.: H04L 29/06, H04L 12/26, H04L 12/24, H04L 29/08

(54) **VERFAHREN UND VORRICHTUNG ZUR VERBESSERUNG EINER SPRACHQUALITÄT EINER MIT EINEM FAHRZEUG GEKOPPELTEN KOMMUNIKATIONSEINRICHTUNG**
METHOD AND APPARATUS FOR IMPROVING A VOICE QUALITY OF A COMMUNICATION DEVICE COUPLED TO A VEHICLE
PROCÉDÉ ET DISPOSITIF D'AMÉLIORATION DE LA QUALITÉ VOCALE D'UNE INSTALLATION DE COMMUNICATION COUPLÉE À UN VÉHICULE

(30) Priorität: 10.08.2016 DE 102016214853
(43) Veröffentlichungstag der Anmeldung: 06.03.2019
(73) Patentinhaber: Audi AG, 85045 Ingolstadt (DE)
(72) Erfinder: GAHNER, Enrico, 85088 Vohburg a.D. (DE)
(86) Internationale Anmeldenummer: PCT/EP2017/065826
(87) Internationale Veröffentlichungsnummer: WO 2018/028871

(56) Entgegenhaltungen:
- EP-A1- 2 031 846
- US-A1- 2015 350 398

## Beschreibung

Die vorliegende Erfindung betrifft ein Verfahren zum Regeln einer Sprachqualität einer Kommunikationsverbindung zwischen einer mit einem Fahrzeug gekoppelten ersten Kommunikationseinrichtung und einer zweiten externen Kommunikationseinrichtung. Ferner betrifft die vorliegende Erfindung eine zur Durchführung des vorgestellten Verfahrens konfigurierte Recheneinheit.

Beim Verwenden einer bspw. über eine Bluetoothverbindung mit einem Fahrzeug gekoppelten Kommunikationseinrichtung kommt es aufgrund von Einstellungen der Kommunikationseinrichtung, die für eine ungekoppelte Kommunikation optimiert sind, zu Qualitätseinbußen hinsichtlich bspw. einer Sprachqualität einer Verbindung zu einer mit dem Fahrzeug verbundenen externen Kommunikationseinrichtung.

Die europäische Druckschrift EP 203 18 46 A1 offenbart ein Verfahren zur Kalibrierung einer Freisprecheinrichtung in einem Fahrzeug, bei dem ein von der Freisprecheinrichtung zu erzeugendes Testsignal mit einem vorgegebenen Signal verglichen wird.

In der europäischen Druckschrift EP 188 32 13 A1 wird ein Verfahren zur Kalibrierung einer Freisprecheinrichtung vorgestellt, bei dem zwischen der Freisprecheinrichtung und einem Terminal wechselseitig ein Testsignal übertragen wird, und bei dem ein jeweiliges empfangenes Testsignal für einen Vergleich mit einem jeweils hinterlegten Testsignal verwendet wird.

Ein Verfahren zur Kalibrierung einer Anordnung mit einem Sender und einem Empfänger, bei dem der Empfänger und der Sender in einen Testbetrieb geschaltet werden, in dem Signalparameter eines Übertragungssignals gemessen und zur Kalibrierung verwendet werden, ist in der europäischen Druckschrift EP 1 583 265 A1 offenbart.

Die Druckschrift US 2015/350398 A1 betrifft ein Verfahren zum Fernsteuern einer Freisprecheinrichtung eines Fahrzeugs, das zusammen mit einem drahtlosen Kommunikationsgerät verwendet wird.

Vor diesem Hintergrund wird ein Verfahren zum Regeln einer Sprachqualität einer Kommunikationsverbindung zwischen einer mit einem Fahrzeug gekoppelten ersten Kommunikationseinrichtung und einer zweiten Kommunikationseinrichtung vorgestellt, bei dem die Kommunikationsverbindung unter Verwendung folgender Schritte geregelt wird:
a) Übermitteln einer Testsequenz, die mittels eines Audiowiedergabegeräts des Fahrzeugs abgespielt wird, an einen Server unter Verwendung einer fahrzeugeigenen Kommunikationseinrichtung;
b) Ermitteln mindestens eines Signalqualitätsparameters eines die mittels der fahrzeugeigenen Kommunikationseinrichtung übermittelte Testsequenz codierenden Signals durch den Server;
c) Übermitteln der durch das von dem Fahrzeug umfassten Audiowiedergabegerät abgespielten Testsequenz an den Server unter Verwendung der ersten Kommunikationseinrichtung;
d) Ermitteln mindestens eines Signalqualitätsparameters eines die mittels der ersten Kommunikationseinrichtung übermittelte Testsequenz codierenden Signals durch den Server;
e) Vergleichen mindestens eines Signalqualitätsparameters des die von der fahrzeugeigenen Kommunikationseinrichtung übermittelte Testsequenz codierenden Signals mit mindestens einem Signalqualitätsparameter des die von der ersten Kommunikationseinrichtung übermittelte Testsequenz codierenden Signals mittels des Servers;
f) Ermitteln von Einstellungen und/oder Signalbearbeitungsverfahren für eine Freisprecheinrichtung des Fahrzeugs, wobei die Einstellungen und/oder Signalbearbeitungsverfahren auf Grundlage von Signalqualitätsparametern der durch die fahrzeugeigene Kommunikationseinrichtung übermittelten Testsequenz und der durch die erste Kommunikationseinrichtung übermittelten Testsequenz und/oder auf Grundlage von zwischen den Signalqualitätsparametern der durch die fahrzeugeigene Kommunikationseinrichtung übermittelten Testsequenz und den Signalqualitätsparametern der durch die erste Kommunikationseinrichtung übermittelten Testsequenz ermittelten Unterschieden ausgewählt werden, um eine Sprachqualität eines durch die erste Kommunikationseinrichtung an die zweite Kommunikationseinrichtung zu übermittelnden Signals und/oder eines von der Freisprecheinrichtung wiederzugebenden Signals zu verbessern;
g) Übermitteln der ermittelten Einstellungen und/oder Signalbearbeitungsverfahren an das Fahrzeug;
h) Einstellen der Einstellungen und/oder Signalbearbeitungsverfahren an der Freisprecheinrichtung des Fahrzeugs.

Ausgestaltungen der vorgestellten Erfindung ergeben sich aus der Beschreibung und den abhängigen Ansprüchen.

Das vorgestellte Verfahren dient insbesondere zum Optimieren einer Sprachverbindung zwischen einer über eine Drahtlosverbindung mit einer Freisprecheinrichtung eines Fahrzeugs gekoppelten Kommunikationseinrichtung, wie bspw. eines Mobiltelefons, und einer externen Kommunikationseinrichtung. Da Mobiltelefone in der Regel ein von einer jeweiligen gekoppelten Freisprecheinrichtung unabhängiges Signalbearbeitungsverfahren eines Sprachsignals durchführen, können Signalbearbeitungsverfahren, die zur Optimierung eines Signals, das von einer von der Freisprecheinrichtung umfassten Kommunikationseinrichtung zur Kommunikation verwendet wird, nicht oder nur unzureichend eingesetzt werden, um das Sprachsignal, das von der mit der Freisprecheinrichtung gekoppelten Kommunikationseinrichtung erzeugt wird, zu optimieren. Dies bedeutet, dass eine unter Verwendung einer über eine Drahtlosverbindung mit einem jeweiligen Mobiltelefon gekoppelten Freisprecheinrichtung erzeugte Sprachqualität, hinter einer Sprachqualität zurück bleibt, wie sie bei einer Verwendung der von der Freisprecheinrichtung umfassten Kommunikationseinrichtung, d. h. eines fahrzeugeigenen Kommunikationsmoduls, zu erreichen ist.

Um aktuelle Einstellungen und Signalbearbeitungsverfahren einer jeweiligen mit einer jeweiligen Freisprecheinrichtung eines Fahrzeugs gekoppelten Kommunikationseinrichtung zu erkennen und die Freisprecheinrichtung des Fahrzeugs entsprechend so zu konfigurieren, dass trotz der Einstellungen und Signalbearbeitungsverfahren der mit der Freisprecheinrichtung gekoppelten Kommunikationseinrichtung die Freisprecheinrichtung dazu verwendet werden kann, ein von der mit der Freisprecheinrichtung gekoppelten Kommunikationseinrichtung zu erzeugendes Sprachsignal zu bearbeiten und dessen Sprachqualität zu optimieren, ist vorgesehen, dass die Einstellungen und Signalbearbeitungsverfahren, die an der mit der Freisprecheinrichtung gekoppelten Kommunikationseinrichtung aktiviert sind, anhand einer Testsequenz ermittelt werden. Um die Einstellungen und Signalbearbeitungsverfahren, die an der mit der Freisprecheinrichtung gekoppelten Kommunikationseinrichtung aktiviert sind, zu ermitteln, ist vorgesehen, dass eine Testsequenz, die bspw. aus einer Frequenzabfolge zwischen 20 Hz und 20000 Hz besteht, von einer Audioquelle in dem Fahrzeug abgespielt, von der Freisprecheinrichtung empfangen bzw. aufgezeichnet und über eine von der Freisprecheinrichtung umfasste Kommunikationseinrichtung, wie bspw. ein GSM-Modul, an einen Server übermittelt wird. Weiterhin ist vorgesehen, dass die Testsequenz, die ggf. erneut wiedergegeben wird, von der mit der Freisprecheinrichtung gekoppelten Kommunikationseinrichtung empfangen bzw. aufgezeichnet und von der mit der Freisprecheinrichtung gekoppelten Kommunikationseinrichtung direkt an den Sever übermittelt wird.

Anhand der von der fahrzeugeigenen Kommunikationseinrichtung übermittelten Testsequenz und der von der mit der Freisprecheinrichtung gekoppelten Kommunikationseinrichtung übermittelten Testsequenz, ist es einem die übermittelten Testsequenzen empfangenden Server möglich, eine Qualität jeweiliger von der fahrzeugeigenen Kommunikationseinrichtung und von der mit der Freisprecheinrichtung gekoppelten Kommunikationseinrichtung übermittelter bzw. erzeugter Signale zu beurteilen. Dazu wertet der Server Signalqualitätsparameter, wie bspw. ein Signal-Rausch Verhältnis, einen Frequenzgang oder eine Varianz eines Signalpegels aus bzw. bestimmt deren Werte. Anhand der Signalqualitätsparameter kann der Server feststellen, welche Einstellungen und/oder Signalbearbeitungsverfahren an der mit der Freisprecheinrichtung gekoppelten Kommunikationseinrichtung aktuell aktiviert sind bzw. welche Einstellungen und/oder Signalbearbeitungsverfahren nötig sind, um das von der mit der Freisprecheinrichtung erzeugte Signal auf ein Qualitätsniveau des von dem fahrzeugeigenen Kommunikationsmodul erzeugten Signals zu heben.

Analog zu dem von der mit der Freisprecheinrichtung gekoppelten Kommunikationseinrichtung übermittelten Signal kann der Server auch das mittels der von der Freisprecheinrichtung umfassten Kommunikationseinrichtung übertragene Signal analysieren und anhand mindestens eines Signalqualitätsparameters hinsichtlich jeweiliger von der Freisprecheinrichtung verwendeter Einstellungen und/oder Signalbearbeitungsverfahren beurteilen. Dazu kann der Sever bspw. jeweilige ermittelte Werte von Signalparametern oder Signalbearbeitungsverfahren mit entsprechenden Referenzwerten abgleichen.

Durch einen Abgleich jeweiliger Signalqualitätsparameter des Signals, das von der mit der Freisprecheinrichtung gekoppelten Kommunikationseinrichtung an den Sever übermittelt wurde, und des Signals, das durch die von der Freisprecheinrichtung umfasste Kommunikationseinrichtung übermittelt wurde, kann der Server Einstellungen und/oder Signalbearbeitungsverfahren ermitteln, mit denen die Freisprecheinrichtung das von der mit der Freisprecheinrichtung gekoppelten Kommunikationseinrichtung erzeugte Signal insbesondere bezüglich einer Sprachqualität optimieren kann. Bspw. kann der Server Einstellungen ermitteln, durch die eine aktive Lautstärkenkontrolle oder eine Signalglättung durchgeführt und/oder ein Übertragungspegel eingestellt wird.

Jeweilige von dem Server ermittelte Einstellungen und/oder Signalbearbeitungsverfahren, die von der Freisprecheinrichtung an dem von der mit der Freisprecheinrichtung gekoppelten Kommunikationseinrichtung bereitzustellenden Signal durchzuführen sind, werden von dem Server an die Freisprecheinrichtung übertragen und von der Freisprecheinrichtung zur Verarbeitung des Signals verwendet. Dies bedeutet, dass die Freisprecheinrichtung das von der bspw. über eine Bluetoothverbindung mit der Freisprecheinrichtung gekoppelten Kommunikationseinrichtung empfangene Signal in Abhängigkeit der von dem Server ermittelten Einstellungen und/oder Signalbearbeitungsverfahren optimiert und, dadurch bedingt, jeweilige von der mit der Freisprecheinrichtung gekoppelten Kommunikationseinrichtung durchgeführte Signalbearbeitungsverfahren, die zu einer schlechten Sprachqualität führen, wenn das Signal mittels der Freisprecheinrichtung ausgegeben bzw. aufgenommen wird, kompensiert.

Unter einer fahrzeugeigenen Kommunikationseinrichtung ist im Kontext des vorgestellten Verfahrens ein Kommunikationsmodul, wie bspw. ein GSM-, 3G- oder LTE-Modul zu verstehen, das in einem Fahrzeug fest eingebaut und durch eine fahrzeugseitige Recheneinheit gesteuert wird. Eine fahrzeugeigene Kommunikationseinrichtung ist insbesondere Teil einer Freisprecheinrichtung, die ein von einem Nutzer des Fahrzeugs bereitgestelltes Sprachsignal empfängt und jeweilige von einem externen Kommunikationsteilnehmer bereitgestellte Sprachsignale über eine Lautsprecheranlage wiedergibt. Eine Freisprecheinrichtung kann von einer fahrzeugeigenen Kommunikationseinrichtung oder einer mit der Freisprecheinrichtung gekoppelten Kommunikationseinrichtung, wie bspw. einem Mobiltelefon, mit einem Sprachsignal, d. h. einem Sprache codierenden Signal, versorgt werden. Ferner kann eine über bspw. ein Mikrofon erfasste Sprachsequenz von der Freisprecheinrichtung in ein Sprachsignal umgewandelt und mittels einer von der Freisprecheinrichtung umfassten Kommunikationseinrichtung oder einer mit der Freisprecheinrichtung gekoppelten Kommunikationseinrichtung an einen externen Kommunikationsteilnehmer übertragen werden.

In einer möglichen Ausgestaltung des vorgestellten Verfahrens ist vorgesehen, dass das Verfahren von einem Nutzer, einer automatischen Prozedur oder einem mit der fahrzeugeigenen Kommunikationseinrichtung oder der ersten Kommunikationseinrichtung verbundenen externen Kommunikationsteilnehmer aktiviert wird.

Um das vorgestellte Verfahren zu aktivieren und eine Sprachqualität eines von einem Nutzer einer Freisprecheinrichtung in einem Fahrzeug verwendeten Sprachsignals zu verbessern, kann vorgesehen sein, dass das vorgestellte Verfahren bspw. bei Bedarf, d. h. bei subjektiv empfundenen Sprachqualitätsproblemen, von dem Nutzer oder einem mit dem Nutzer kommunizierenden Kommunikationsteilnehmer aktiviert werden kann. Selbstverständlich ist es auch denkbar, dass das vorgestellte Verfahren automatisch, bspw. beim Erkennen eines Sprachqualitätsparameters, wie bspw. einem Pegel, aktiviert wird, wenn der mit einer Varianz, die größer als ein vorgegebener Wert ist, schwankt. Ein entsprechender Steuerbefehl zum Aktivieren des vorgestellten Verfahrens kann von jedem Kommunikationsteilnehmer einer jeweiligen Kommunikationsanordnung oder einem jeweiligen verwendeten Mobilfunknetzwerk bereitgestellt werden.

In einer weiteren möglichen Ausgestaltung des vorgestellten Verfahrens ist vorgesehen, dass als der mindestens eine Signalqualitätsparameter mindestens ein Signalparameter der folgenden Liste an Signalqualitätsparametern gewählt wird: Signalschwankungen, Pegelschwankungen, Frequenzgang und Sprachqualität.

Zum Ermitteln jeweiliger von der mit der Freisprecheinrichtung gekoppelten Kommunikationseinheit verwendeter Einstellungen und/oder Signalbearbeitungsverfahren kann jeder technisch geeignete Qualitätsparameter zum Beurteilen eines Kommunikationssignals verwendet werden.

In einer weiteren möglichen Ausgestaltung des vorgestellten Verfahrens ist vorgesehen, dass die Einstellungen an der Kommunikationseinheit des Fahrzeugs Einstellungen zur Signalbearbeitung sind, die zu einem verbesserten Signal im Bezug auf mindestens einen Signalparameter der folgenden Liste an Signalparametern führen: Downlink, Pegel, Varianzen, Sprachqualität und Frequenzgang.

In einer weiteren möglichen Ausgestaltung des vorgestellten Verfahrens ist vorgesehen, dass eine Testsequenz von dem Server zu der fahrzeugeigenen Kommunikationseinrichtung übermittelt wird und die fahrzeugeigene Kommunikationseinrichtung in Abhängigkeit einer Signalqualität eines die von dem Server an die fahrzeugeigene Kommunikationseinrichtung übermittelte Testsequenz codierenden Signals eingestellt wird.

Neben einer Optimierung von Einstellungen und/oder Signalbearbeitungsverfahren zum Verbessern einer Signalqualität eines Signals, das von einer jeweiligen Freisprecheinrichtung an einen externen Kommunikationsteilnehmer übermittelt wird, kann das vorgestellte Verfahren auch zur Optimierung einer Wiedergabe eines von einem jeweiligen externen Kommunikationsteilnehmer bereitgestellten Signals verwendet werden. Dazu ist vorgesehen, dass von dem externen Kommunikationsteilnehmer, wie bspw. einem Server oder einem Mobiltelefon, eine Testsequenz an die Freisprecheinrichtung übermittelt wird und die Freisprecheinrichtung ein entsprechendes Signal hinsichtlich jeweiliger Signalqualitätsparameter analysiert und mit bspw. einer vorgegebenen Referenz abgleicht, um auf jeweilige vorzunehmende Einstellungen und/oder jeweilige zu aktivierende Signalbearbeitungsverfahren zu schließen und entsprechend an der Freisprecheinrichtung zu aktivieren. Dabei können die an der Freisprecheinrichtung vorzunehmenden Einstellungen bspw. Steuerbefehle umfassen, die von einer jeweiligen mit der Freisprecheinrichtung gekoppelten Kommunikationseinrichtung verwendete Signalbearbeitungsverfahren rückgängig machen bzw. neutralisieren, verstärken, abschwächen oder optimieren.

In einer weiteren möglichen Ausgestaltung des vorgestellten Verfahrens ist vorgesehen, dass ein Typ der ersten Kommunikationseinrichtung ermittelt und ein Profil mit jeweiligen an der Freisprecheinrichtung des Fahrzeugs einzustellenden Einstellungen und/oder mit jeweiligen Werten von Signalqualitätsparametern des die von der ersten Kommunikationseinrichtung übermittelte Testsequenz codierenden Signals erstellt und für eine Einstellung einer jeweiligen Freisprecheinrichtung bei einer Kopplung mit einer Kommunikationseinrichtung des Typs der ersten Kommunikationseinrichtung ohne eine vorangehende Übermittlung von Testsequenzen in einem Speicher hinterlegt wird. Dabei können die Werte der Signalqualitätsparameter einer individuellen Gewichtung unterzogen werden, bei der ein Einfluss ausgewählter Werte gegenüber anderen Werten bei der Ermittlung entsprechender Einstellungen erhöht wird.

Durch Ermittlung eines Typs einer jeweiligen mit einer Freisprecheinrichtung gekoppelten Kommunikationseinrichtung, durch bspw. Auslesen einer Typinformation durch die Freisprecheinrichtung oder einen mit der Kommunikationseinrichtung kommunizierenden Server, kann ein zu der Kommunikationseinrichtung zugehöriges Profil erstellt werden, in dem Informationen über Signaleigenschaften, d. h. insbesondere über jeweilige erkannte Einstellungen und/oder Signalbearbeitungsverfahren, die anhand jeweiliger Werte von Signalqualitätsparametern ermittelt wurden, abgespeichert und für bspw. eine Erstellung von Einstellungen und/oder Signalbearbeitungsverfahren für eine mit der Kommunikationseinrichtung zu koppelnde Freisprecheinrichtung verwendet werden. Mittels eines Profils einer jeweiligen Kommunikationseinrichtung können entsprechend schnell und ggf. ohne eine vorherige Analyse von Testsequenzen jeweilige für einen jeweiligen mit einer Freisprecheinrichtung zu koppelnden Kommunikationseinrichtungstyp geeignete Einstellungen der Freisprecheinrichtung gefunden und an der Freisprecheinrichtung eingestellt werden. Dazu kann die Freisprecheinrichtung bspw. eine Datenbank umfassen, in der jeweilige Einstellungen und/oder Signalbearbeitungsverfahren für eine Anzahl Kommunikationseinrichtungstypen hinterlegt sind.

In einer weiteren möglichen Ausgestaltung des vorgestellten Verfahrens ist vorgesehen, dass mittels der in dem Speicher hinterlegten Einstellungen und/oder der Werte der Signalqualitätsparameter eine Qualität eines jeweiligen von der ersten Kommunikationseinrichtung verwendeten Mobilfunknetzes beurteilt wird.

Unter Verwendung von in einem Profil hinterlegten Informationen über Einstellungen und/oder Signalbearbeitungsverfahren, die von einer jeweiligen Kommunikationseinrichtung verwendet werden, können Eigenschaften eines jeweiligen von der Kommunikationseinrichtung gesendeten Signals, die auf Einstellungen und/oder Signalbearbeitungsverfahren der Kommunikationseinrichtung basieren, erkannt werden. Entsprechend kann ein Anteil an einer Veränderung von Eigenschaften des Signals, der auf einem Einfluss eines jeweiligen verwendeten Mobilfunknetzes basiert, erkannt und zur Beurteilung einer Qualität des Mobilfunknetzes verwendet werden. Sobald der Einfluss einer jeweiligen Kommunikationseinrichtung auf ein Signal bekannt ist, können entsprechende Signaleigenschaften der Kommunikationseinrichtung zugeordnet werden, so dass alle weiteren Eigenschaften, d. h. alle Veränderungen eines Signals gegenüber einer Referenz, auf einem jeweiligen verwendeten Mobilfunknetz basieren müssen.

Ferner betrifft die vorliegende Erfindung eine Recheneinheit zum Ermitteln einer Signalqualität einer Kommunikationsverbindung, wobei die Recheneinheit dazu konfiguriert ist, ein erstes Signal mit einer Testsequenz von einer ersten Kommunikationseinrichtung und ein zweites Signal mit einer Testsequenz von einer mit der ersten Kommunikationsanordnung verbundenen und von einem Fahrzeug umfassten zweiten Kommunikationseinrichtung zu empfangen, und wobei die Recheneinheit weiterhin dazu konfiguriert ist, mindestens einen Signalqualitätsparameter des ersten Signals und des zweiten Signals zu ermitteln und auf Grundlage eines Vergleichs des mindestens einen Signalqualitätsparameters des ersten und des zweiten Signals Einstellungen und/oder Signalbearbeitungsverfahren für eine Freisprecheinrichtung des Fahrzeugs zu ermitteln, mittels derer eine Signalqualität eines durch die erste Kommunikationseinrichtung an eine externe Kommunikationseinrichtung zu übertragenden Signals zu verbessern ist, und die Einstellungen und/oder Signalbearbeitungsverfahren an die Freisprecheinrichtung des Fahrzeugs zu übertragen.

Die vorgestellte Recheneinheit dient insbesondere zur Durchführung des vorgestellten Verfahrens.

Weitere Vorteile und Ausgestaltungen ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

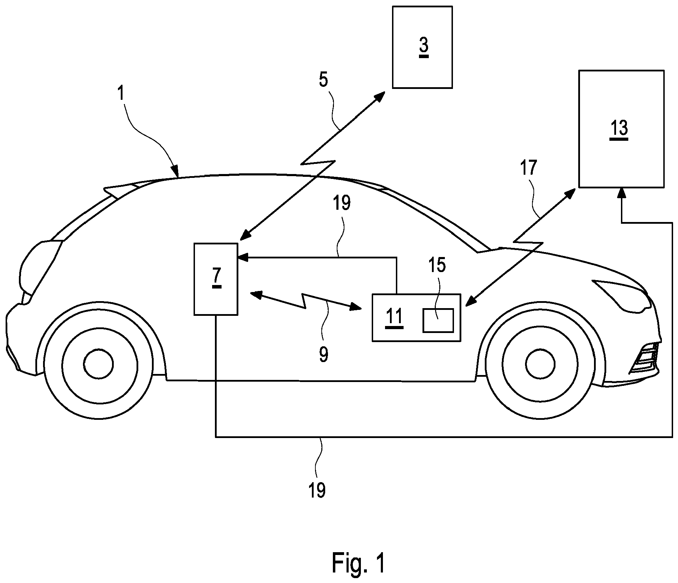

Figur 1 zeigt eine schematische Darstellung einer möglichen Ausgestaltung des vorgestellten Verfahrens.

In Figur 1 ist ein Fahrzeug 1 dargestellt. Das Fahrzeug 1 steht über eine Kommunikationsverbindung mit einer externen Kommunikationseinrichtung 3 in Kontakt. Dazu ist eine erste Kommunikationseinrichtung 7 über eine Bluetoothverbindung 9 mit einer Freisprecheinrichtung 11 des Fahrzeugs 1 verbunden.

Die Freisprecheinrichtung 11 erfasst gesprochene Sprache eines Nutzers des Fahrzeugs 1 mittels eines Mikrofons, übermittelt ein entsprechendes Sprachsignal über die Bluetoothverbindung 9 an die erste Kommunikationseinrichtung 7, die wiederum das Sprachsignal an die externe Kommunikationseinrichtung 3 übermittelt bzw. Sprachsignale von der externen Kommunikationseinrichtung 3 empfängt, wie durch Pfeil 5 angedeutet, und über die Bluetoothverbindung 9 an die Freisprecheinrichtung 11 überträgt.

Die Kommunikationseinrichtung 7 ist standardmäßig dazu konfiguriert, ein- und ausgehende Sprachsignale so zu verarbeiten, dass diese mit optimaler Sprachqualität auf der Kommunikationseinrichtung wiederzugeben sind. Um jeweilige an der ersten Kommunikationseinrichtung 7 ein- und ausgehende Sprachsignale so zu verarbeiten, dass diese mit optimaler Sprachqualität durch die Freisprecheinrichtung 11 bzw. die externe Kommunikationseinrichtung 3 wiederzugeben sind, ist vorgesehen, dass die Freisprecheinrichtung 11 kalibriert wird. Zur Kalibrierung der Freisprecheinrichtung 11 spielt die Freisprecheinrichtung über bspw. einen Lautsprecher eine Testsequenz ab, erfasst diese über ein Mikrofon und übermittelt ein entsprechendes Testsignal an einen Server 13 über eine von der Freisprecheinrichtung 11 umfasste zweite Kommunikationseinrichtung 15, wie durch Pfeil 17 angedeutet.

Weiterhin übermittelt die Freisprecheinrichtung 11 das Testsignal über die erste Kommunikationseinrichtung 7 an den Sever 13, wie durch Pfeile 19 angedeutet.

Der Sever 13 ermittelt Eigenschaften des mittels der zweiten Kommunikationseinrichtung 15 übermittelten Testsignals. Dazu erhebt der Server 13 Werte von Signalqualitätsparametern, wie bspw. einem Signal-Rausch Verhältnis oder einer Varianz eines Pegelverlaufs und schließt aufgrund der Werte auf aktuelle Einstellungen der Freisprecheinrichtung 11. Weiterhin ermittelt der Server 13 Eigenschaften des mittels der ersten Kommunikationseinrichtung 7 übermittelten Testsignals. Dazu erhebt der Server 13 analog zu dem Vorgehen bezüglich des mittels der zweiten Kommunikationseinrichtung 15 übermittelten Testsignals Werte von Signalqualitätsparametern, wie bspw. einem Signal-Rausch Verhältnis oder einer Varianz eines Pegelverlaufs des mittels der ersten Kommunikationseinrichtung 7 übermittelten Testsignals und schließt aufgrund entsprechender Werte auf aktuelle Einstellungen und/oder auf aktuell aktivierte Signalbearbeitungsverfahren der ersten Kommunikationseinrichtung 7.

Um ein von der ersten Kommunikationseinrichtung 7 zu erzeugendes Signal zu optimieren und bspw. an eine Qualität eines von der zweiten Kommunikationseinrichtung 15 erzeugten Signals anzupassen, ist vorgesehen, dass der Server 13 die Werte der Signalqualitätsparameter des Testsignals der zweiten Kommunikationseinrichtung 15 mit den Werten der Signalqualitätsparameter des Testsignals der ersten Kommunikationseinrichtung 7 abgleicht und Einstellungen und/oder Signalbearbeitungsverfahren ermittelt, die zur Qualitätssteigerung des von der ersten Kommunikationseinrichtung 7 zu erzeugenden Signals verwendet werden können. Die von dem Server 13 ermittelten Einstellungen und/oder Signalbearbeitungsverfahren werden an die Freisprecheinrichtung 11 übertragen, wie durch Pfeil 17 angedeutet. Die Freisprecheinrichtung 11 führt an einem jeweiligen zu übertragenden Signal, das bspw. eine Sprachnachricht eines Nutzers codiert, entsprechend der von dem Server 13 übermittelten Einstellungen und/oder Signalbearbeitungsverfahren in einer fahrzeuginternen Signalbearbeitung eine Vorverarbeitung durch und überträgt anschließend über die Bluetoothverbindung 9 das vorverarbeitete Signal an die erste Kommunikationseinrichtung 7. Die erste Kommunikationseinrichtung 7 verarbeitet das von der Freisprecheinrichtung 11 vorverarbeitete Signal und überträgt ein optimiertes Signal an die externe Kommunikationseinrichtung 3, wie durch Pfeil 5 angedeutet.

Um eine Sprachqualität eines von der Kommunikationseinrichtung 7 empfangenen Signals bei einer Wiedergabe durch die Freisprecheinrichtung zu optimieren, kann die Freisprecheinrichtung auf Grundlage von Einstellungen und/oder Signalbearbeitungsverfahren eingestellt werden, die bei einem Abgleich mit einem von dem Server 13 an die Freisprecheinrichtung 11 übermittelten Signal und einem Referenzwert ermittelt wurden.

## Patentansprüche

1. Verfahren zum Regeln einer Sprachqualität einer Kommunikationsverbindung (5) zwischen einer mit einem Fahrzeug (1) gekoppelten ersten Kommunikationseinrichtung (7) und einer zweiten Kommunikationseinrichtung (3), bei dem die Kommunikationsverbindung unter Verwendung folgender Schritte geregelt wird:
a) Übermitteln einer Testsequenz, die mittels eines Audiowiedergabegeräts des Fahrzeugs abgespielt wird, an einen Server (13) unter Verwendung einer fahrzeugeigenen Kommunikationseinrichtung (15);
b) Ermitteln mindestens eines Signalqualitätsparameters eines die mittels der fahrzeugeigenen Kommunikationseinrichtung übermittelte Testsequenz codierenden Signals durch den Server;
c) Übermitteln der durch das von dem Fahrzeug umfassten Audiowiedergabegerät abgespielten Testsequenz an den Server unter Verwendung der ersten Kommunikationseinrichtung;
d) Ermitteln mindestens eines Signalqualitätsparameters eines die mittels der ersten Kommunikationseinrichtung übermittelte Testsequenz codierenden Signals durch den Server;
e) Vergleichen mindestens eines Signalqualitätsparameters des die von der fahrzeugeigenen Kommunikationseinrichtung übermittelte Testsequenz codierenden Signals mit mindestens einem Signalqualitätsparameter des die von der ersten Kommunikationseinrichtung übermittelte Testsequenz codierenden Signals mittels des Servers;
f) Ermitteln von Einstellungen und/oder Signalbearbeitungsverfahren für eine Freisprecheinrichtung (11) des Fahrzeugs, wobei die Einstellungen und/oder Signalbearbeitungsverfahren auf Grundlage von Signalqualitätsparametern der durch die fahrzeugeigene Kommunikationseinrichtung übermittelten Testsequenz und der durch die erste Kommunikationseinrichtung übermittelten Testsequenz und/oder auf Grundlage von zwischen den Signalqualitätsparametern der durch die fahrzeugeigene Kommunikationseinrichtung übermittelten Testsequenz und den Signalqualitätsparametern der durch die erste Kommunikationseinrichtung übermittelten Testsequenz ermittelten Unterschieden ausgewählt werden, um eine Sprachqualität eines durch die erste Kommunikationseinrichtung an die zweite Kommunikationseinrichtung zu übermittelnden Signals und/oder eines von der Freisprecheinrichtung wiederzugebenden Signals zu verbessern;
g) Übermitteln der ermittelten Einstellungen und/oder Signalbearbeitungsverfahren an das Fahrzeug;
h) Einstellen der Einstellungen und/oder Signalbearbeitungsverfahren an der Freisprecheinrichtung des Fahrzeugs.

2. Verfahren nach Anspruch 1, bei dem die mittels der ersten Kommunikationseinrichtung zu übermittelnde Testsequenz und die mittels der fahrzeugeigenen Kommunikationseinrichtung zu übermittelnde Testsequenz zu unterschiedlichen Zeitpunkten von dem Audiowiedergabegerät abgespielt werden.

3. Verfahren nach Anspruch 1 oder 2, bei dem das Verfahren von einem Nutzer, einer automatischen Prozedur oder einem mit der fahrzeugeigenen Kommunikationseinrichtung oder der ersten Kommunikationseinrichtung verbundenen externen Kommunikationsteilnehmer aktiviert wird.

4. Verfahren nach einem der voranstehenden Ansprüche, bei dem als der mindestens eine Signalqualitätsparameter mindestens ein Signalparameter der folgenden Liste an Signalqualitätsparametern gewählt wird: Signalschwankungen, Pegelschwankungen, Frequenzgang und Sprachqualität.

5. Verfahren nach einem der voranstehenden Ansprüche, bei dem als Testsequenz ein Wave-Signal mit einer vorgegebenen Frequenzabfolge zwischen 20 Hz und 20.000 Hz gewählt wird.

6. Verfahren nach einem der voranstehenden Ansprüche, bei dem die Einstellungen und/oder Signalbearbeitungsverfahren für die Freisprecheinrichtung des Fahrzeugs Einstellungen und/oder Signalbearbeitungsverfahren zur Signalbearbeitung sind, die zu einem verbesserten Signal im Bezug auf mindestens einen Signalparameter der folgenden Liste an Signalparametern führen: Downlink, Pegel, Varianzen, Sprachqualität und Frequenzgang.

7. Verfahren nach einem der voranstehenden Ansprüche, bei dem eine Testsequenz von dem Server zu der fahrzeugeigenen Kommunikationseinrichtung übermittelt wird und die Freisprecheinrichtung in Abhängigkeit einer Signalqualität eines die von dem Server an die fahrzeugeigene Kommunikationseinrichtung übermittelte Testsequenz codierenden Signals eingestellt wird.

8. Verfahren nach einem der voranstehenden Ansprüche, bei dem ein Typ der ersten Kommunikationseinrichtung ermittelt und ein Profil mit jeweiligen an der Freisprecheinrichtung einzustellenden Einstellungen und/oder mit jeweiligen Werten von Signalqualitätsparametern des die von der ersten Kommunikationseinrichtung übermittelte Testsequenz codierenden Signals erstellt und für eine Einstellung einer jeweiligen Freisprecheinrichtung bei einer Kopplung mit einer Kommunikationseinrichtung des Typs der ersten Kommunikationseinrichtung ohne eine vorangehende Übermittlung von Testsequenzen in einem Speicher hinterlegt wird.

9. Verfahren nach Anspruch 8, bei dem mittels der in dem Speicher hinterlegten Einstellungen und/oder der Werte der Signalqualitätsparameter eine Qualität eines jeweiligen von der ersten Kommunikationseinrichtung verwendeten Mobilfunknetzes beurteilt wird.

10. Recheneinheit zum Ermitteln einer Signalqualität einer Kommunikationsverbindung (5), wobei die Recheneinheit (13) dazu konfiguriert ist, ein erstes Signal mit einer Testsequenz von einer ersten Kommunikationseinrichtung (7) und ein zweites Signal mit einer Testsequenz von einer mit der ersten Kommunikationsanordnung (7) verbundenen und von einem Fahrzeug (1) umfassten zweiten Kommunikationseinrichtung (15) zu empfangen, und wobei die Recheneinheit (13) weiterhin dazu konfiguriert ist, mindestens einen Signalqualitätsparameter des ersten Signals und des zweiten Signals zu ermitteln und auf Grundlage eines Vergleichs des mindestens einen Signalqualitätsparameters des ersten und des zweiten Signals Einstellungen und/oder Signalbearbeitungsverfahren für eine Freisprecheinrichtung (11) des Fahrzeugs (1) zu ermitteln, mittels derer eine Signalqualität eines durch die erste Kommunikationseinrichtung (7) an eine externe Kommunikationseinrichtung (3) zu übertragenden Signals zu verbessern ist, und die Einstellungen und/oder Signalbearbeitungsverfahren an die Freisprecheinrichtung (11) des Fahrzeugs (1) zu übertragen.

## Claims

1. Method for regulating a speech quality of a communication connection (5) between a first communication device (7) coupled with a vehicle (1) and a second communication device (3), in the case of which the communication connection is regulated by using the following steps:
a) transmitting a test sequence, which is played by means of an audio reproducing apparatus of the vehicle, to a server (13) using a communication device (15) belonging to the vehicle;
b) determining on the part of the server at least one signal quality parameter of a signal coding the test sequence transmitted by means of the communication device belonging to the vehicle;
c) transmitting the test sequence played by the audio reproducing apparatus comprised by the vehicle to the server using the first communication device;
d) determining on the part of the server at least one signal quality parameter of a signal coding the test sequence transmitted by means of the first communication device;
e) comparing by means of the server at least one signal quality parameter of the signal coding the test sequence transmitted by the communication device belonging to the vehicle with at least one signal quality parameter of the signal coding the test sequence transmitted by the first communication device;
f) determining settings and/or signal processing methods for a hands-free speech device (11) of the vehicle, wherein the settings and/or signal processing methods are selected on the basis of signal quality parameters of the test sequence transmitted by the communication device belonging to the vehicle and of the test sequence transmitted by the first communication device and/or on the basis of differences determined between the signal quality parameters of the test sequence transmitted by the communication device belonging to the vehicle and the signal quality parameters of the test sequence transmitted by the first communication device, in order to improve a speech quality of a signal to be transmitted by the first communication device to the second communication device and/or of a signal to be reproduced by the hands-free speech device;
g) transmitting the determined settings and/or signal processing methods to the vehicle;
h) setting the settings and/or signal processing methods at the hands-free speech device of the vehicle.

2. Method according to claim 1, in which the test sequence to be transmitted by means of the first communication device and the test sequence to be transmitted by means of the communication device belonging to the vehicle are played at different points in time by the audio reproducing apparatus.

3. Method according to claim 1 or 2, in which the method is activated by a user, an automatic procedure or an external communication participant connected with the communication device belonging to the vehicle or the first communication device.

4. Method according to any of the preceding claims, in which as the at least one signal quality parameter at least one signal parameter of the following list of signal quality parameters is selected: signal fluctuations, level fluctuations, frequency response and speech quality.

5. Method according to any of the preceding claims, in which as a test sequence a wave signal is selected with a predetermined frequency sequence between 20 Hz and 20,000 Hz.

6. Method according to any of the preceding claims, in which the settings and/or signal processing methods for the hands-free speech device of the vehicle are settings and/or signal processing methods for signal processing, which result in an improved signal with respect to at least one signal parameter of the following list of signal parameters: downlink, level, variances, speech quality and frequency response.

7. Method according to any of the preceding claims, in which a test sequence is transmitted from the server to the communication device belonging to the vehicle and the hands-free speech device is set depending on a signal quality of a signal coding the test sequence transmitted from the server to the communication device belonging to the vehicle.

8. Method according to any of the preceding claims, in which a type is determined of the first communication device and a profile having respective settings to be set at the hands-free speech device and/or having respective values of signal quality parameters of the signal coding the test sequence transmitted by the first communication device is generated and is stored, for a setting of a respective hands-free speech device at a coupling with a communication device of the type of the first communication device without a previous transmission of test sequences, in a storage device.

9. Method according to claim 8, in which, by means of the settings stored in the storage device and/or the values of the signal quality parameters, a quality of a respective mobile radio network used by the first communication device is judged.

10. Computing unit for determining a signal quality of a communication connection (5) wherein the computing unit (13) is configured to receive a first signal having a test sequence from a first communication device (7) and a second signal having a test sequence from a second communication device (15) connected with the first communication arrangement (7) and comprised by a vehicle (1), and wherein the computing unit (13) is furthermore configured to determine at least one signal quality parameter of the first signal and of the second signal and on the basis of a comparison of the at least one signal quality parameter of the first and of the second signal to determine settings and/or signal processing methods for a hand-free speech device (11) of the vehicle (1), by means of which hands-free speech device a signal quality of a signal to be transmitted by the first communication device (7) to an external communication device (3) is to be improved, and the settings and/or signal processing methods are to be transmitted to the hands-free speech device (11) of the vehicle (1).

## Revendications

1. Procédé de régulation d'une qualité de transmission de la parole d'une liaison de communication (5) entre un premier dispositif de communication (7) couplé à un véhicule (1) et un second dispositif de communication (3), dans lequel la liaison de communication est régulée en utilisant les étapes suivantes consistant à :
a) transmettre une séquence de test, qui est lue au moyen d'un appareil de lecture audio du véhicule, sur un serveur (13) en utilisant un dispositif de communication propre au véhicule (15) ;
b) déterminer au moins un paramètre de qualité de signal d'un signal codant une séquence de test transmise au moyen du dispositif de communication propre au véhicule par le serveur ;
c) transmettre la séquence de test lue par l'appareil de lecture audio compris dans le véhicule sur le serveur en utilisant le premier dispositif de communication ;
d) déterminer au moins un paramètre de qualité de signal d'un signal codant une séquence de test transmise au moyen du premier dispositif de communication par le serveur ;
e) comparer au moins un paramètre de qualité de signal du signal codant la séquence de test transmise par le dispositif de communication propre au véhicule avec au moins un paramètre de qualité de signal du signal codant la séquence de test transmise par le premier dispositif de communication au moyen du serveur ;
f) déterminer des réglages et/ou des procédés de traitement de signal pour un dispositif mains libres (11) du véhicule, dans lequel des réglages et/ou des procédés de traitement de signal sont sélectionnés sur la base de paramètres de qualité de signal de la séquence de test transmise par le dispositif de communication propre au véhicule et de la séquence de test transmise par le premier dispositif de communication et/ou sur la base de différences déterminées entre les paramètres de qualité de signal de la séquence de test transmise par le dispositif de communication propre au véhicule et les paramètres de qualité de signal de la séquence de test transmise par le premier dispositif de communication pour améliorer une qualité de transmission de la parole d'un signal à transmettre par le premier dispositif de communication au second dispositif de communication et/ou d'un signal à reproduire par le dispositif mains libres ;
g) transmettre les réglages et/ou les procédés de traitement de signal déterminés au véhicule ;
h) ajuster les réglages et/ou les procédés de traitement de signal au niveau du dispositif mains libres du véhicule.

2. Procédé selon la revendication 1, dans lequel la séquence de test à transmettre au moyen du premier dispositif de communication et la séquence de test à transmettre au moyen du dispositif de communication propre au véhicule sont lues à des moments différents par l'appareil de lecture audio.

3. Procédé selon la revendication 1 ou 2, dans lequel le procédé est activé par un utilisateur, une procédure automatique ou un participant de communication externe connecté au dispositif de communication propre au véhicule ou au premier dispositif de communication.

4. Procédé selon l'une quelconque des revendications précédentes, dans lequel au moins un paramètre de signal de la liste suivante est sélectionné en tant que le au moins un paramètre de qualité de signal parmi les paramètres de qualité de signal suivants : fluctuations de signal, fluctuations de niveau, réponse en fréquence et qualité de transmission de la parole.

5. Procédé selon l'une quelconque des revendications précédentes, dans lequel un signal d'onde avec une séquence fréquentielle prédéterminée comprise entre 20 Hz et 20 000 Hz est sélectionné en tant que séquence de test.

6. Procédé selon l'une quelconque des revendications précédentes, dans lequel les réglages et/ou les procédés de traitement de signal pour le dispositif mains libres du véhicule sont des réglages et/ou des procédés de traitement de signal pour un traitement de signal, qui conduisent à un signal amélioré par rapport à au moins un paramètre de signal de la liste suivante parmi les paramètres de signal suivants : liaison descendante, niveau, variances, qualité de transmission de la parole et réponse en fréquence.

7. Procédé selon l'une quelconque des revendications précédentes, dans lequel une séquence de test est transmise à partir du serveur au dispositif de communication propre au véhicule et le dispositif mains libres est ajusté en fonction d'une qualité de signal d'un signal codant la séquence de test transmise au dispositif de communication propre au véhicule par le serveur.

8. Procédé selon l'une quelconque des revendications précédentes, dans lequel un type du premier dispositif de communication est déterminé, et un profil est établi avec respectivement des réglages à ajuster sur le dispositif mains libres et/ou avec respectivement des valeurs de paramètres de qualité de signal du signal codant la séquence de test transmise par le premier dispositif de communication, et est enregistré dans une mémoire sans une transmission préalable de séquences de test pour ajuster un dispositif mains libres respectif par un couplage à un dispositif de communication du type du premier dispositif de communication.

9. Procédé selon la revendication 8, dans lequel une qualité d'un réseau de téléphonie mobile respectif utilisé par le premier dispositif de communication est évaluée au moyen des réglages enregistrés dans la mémoire et/ou des valeurs de paramètre de qualité de signal.

10. Unité de calcul pour déterminer une qualité de signal d'une liaison de communication (5), dans laquelle l'unité de calcul (13) est configurée de manière à recevoir un premier signal avec une séquence de test depuis un premier dispositif de communication (7) et un second signal avec une séquence de test depuis un second dispositif de communication (15) connecté au premier agencement de communication (7) et compris dans un véhicule (1), et dans laquelle l'unité de calcul (13) est en outre configurée de manière à déterminer au moins un paramètre de qualité de signal du premier signal et du second signal et, sur la base d'une comparaison du au moins un paramètre de qualité de signal des premier et second signaux, à déterminer des réglages et/ou des procédés de traitement de signal pour un dispositif mains libres (11) du véhicule (1), au moyen desquels une qualité de signal d'un signal à transmettre par le premier dispositif de communication (7) à un dispositif de communication externe (3) est à améliorer, et à transmettre les réglages et/ou les procédés de traitement de signal au dispositif mains libres (11) du véhicule (1).
